# EUROPEAN PATENT APPLICATION

(11) **EP 2 979 848 A1**
(43) Date of publication of application: **03.02.2016**
(21) Application number: 15175566.7
(22) Date of filing: 07.07.2015
(51) Int. Cl.: B29C 65/50, B29C 65/36

(54) **THERMOPLASTIC JOINING SYSTEM AND METHOD**

(30) Priority: 31.07.2014 DE 102014110908
(71) Applicant: Newfrey LLC, Newark, Delaware 19711 (US)
(72) Inventor: SALTENBERGER, Reimar, 35394 Giessen (DE)
(74) Representative: Witte, Weller & Partner Patentanwälte mbB

(57) **Abstract**

Composite component (40) that can be joined onto an area of a workpiece (28), with a base element (26) of a base material, the base element (26) having an area (44) for joining onto the workpiece area, a recess (42) in which a melting element (10) of a meltable plastics material is arranged being formed in the base area (44).

In this case, the melting element (10) protrudes axially with respect to the base area (44) in the non-melted state, so that the composite component (40) can be placed with the melting element (10) onto the workpiece area at the beginning of the joining process, the volume of the melting element (10) and the volume of the recess (42) being adapted to one another in such a way that the base area (44) can come closer to the workpiece area during the joining process, in order to limit an escape of molten material of the melting element (10) from the recess (42).

## Description

The present invention relates to a composite component that can be joined onto an area of a workpiece, with a base element of a base material, the base element having a base area for joining onto the workpiece area, a recess in which a melting element of a meltable plastics material is arranged being formed in the base area.

The present invention also relates to a joining connection with such a composite component and a workpiece, and relates to a melting element that is suitable in particular for a composite component of the aforementioned type. Finally, the present invention relates to a method for producing a thermoplastic joining connection by using a composite component and/or a melting element.

In the field of motor-vehicle body making, there are various known methods of connecting sheet-like components to one another or for fixing anchoring components on sheet-like components. While in the past the materials used here for the components were essentially steel-based, in modern body making there is a material mixture comprising a wide variety of materials, including steel, aluminium, plastics and fibre-reinforced composite materials.

For connecting thermoplastic materials, for example, a large number of different methods are known. These each have quite specific advantages and quite specific disadvantages. For example, laser-based methods such as laser transmission welding and laser butt welding are relatively expensive and can only be used in the case of one-sided accessibility, but not when two-sided access is required. Two-sided access may be required in particular whenever a thermoplastic joining process is carried out inside a cavity, for example inside a plastic tank or the like. In this case it is sometimes necessary because of the limited accessibility inside the cavity to supply the process energy from the outside, which in the case of the method mentioned can generally only be accomplished with difficulty or not at all. The same also applies to so-called infrared welding. Also in the case of so-called heated-tool welding as well as in the case of microwave welding and thermal impulse welding, a joining process with required two-sided accessibility cannot be accomplished, or only with difficulty.

Conversely, processes such as friction welding and ultrasonic welding can only be accomplished in the case of two-sided accessibility. In the case of only one-sided accessibility, these methods are disadvantageous, especially since the compressive loading on the respective component is then also relatively great.

Thermal riveting can again be accomplished very well in the case of one-sided accessibility, but only with difficulty in the case of two-sided accessibility.

On the other hand, both one-sided accessibility and two-sided accessibility can be accomplished in the case of so-called hot-wire Ω welding and in the case of thermoplastic welding using an inductive energy supply.

Hot-wire Ω welding is relatively disadvantageous with regard to the compressive loading applied to the component, with regard to the process time and with regard to the freedom of design. The process costs are also relatively high, whereas the system costs may be comparatively low.

It is known in the case of thermoplastic joining methods using inductive energy sources to provide one joining component with a holding portion and a flange portion of thermoplastic material, while a metal portion that has axial openings is integrated in the flange portion. The metal portion is formed in the manner of a metal sheet and is integrated in the flange portion in such a way that the joining area is formed by an area portion of the metal portion and an area portion of the flange portion. The area portion of the flange portion forms a periphery that surrounds the metal portion. The metal portion can be inductively heated in such a way that the peripheral flange portion melts and, during the melting of the joining component onto a workpiece, completely encloses the metal portion. Such a joining component is known for example from the document WO 2010/057599 A1.

In the case of the known joining component, the metal portion and the flange portion are consequently always adapted to one another to achieve the desired melting behaviour of the periphery of the flange portion.

A fuel tank for a motor vehicle in which a component is welded thermoplastically onto an inner wall is known from the document GB 2 408 972 A. The component has an inductively heatable insert. The component can be introduced into the interior of the tank by means of a robot. An induction coil may be provided on the outside of the tank. Instead of an inductively heatable insert, induction particles may also be introduced into the component adjacent to the welding area, specifically instead of the induction insert.

A further method for welding a component onto an inner wall of a vessel is known from the document US 2006/0191909 A1.

In the case of this method, both an electromagnet for applying axial forces and an induction coil for melting plastics material are arranged on the outer side of the hollow vessel (tank).

Furthermore, it is generally known to integrate into joining areas of components made of thermoplastic material coil-like helixes, through which current can flow, in order to melt the joining area.

The last-mentioned joining methods and components generally have the disadvantage that the joining zone must in each case be adapted to the joining task.

Against this background, an object of the invention is to provide an improved thermoplastic joining system.

This object is achieved according to one aspect of the present invention by a composite component of the type mentioned at the beginning, the melting element protruding axially with respect to the base area in the non-melted state, so that the composite component can be placed with the melting element onto the workpiece area at the beginning of the joining process, the volume of the melting element and the volume of the recess being adapted to one another in such a way that the base area can come closer to the workpiece area during the joining process, in order to limit an escape of molten material of the melting element from the recess.

In the case of a joining process by means of this composite component, the melting element is melted and the composite component is preferably pressed in the direction of the workpiece, so that during the melting of the melting element the base area comes closer to the workpiece area. This allows the joining zone to be protected more easily from environmental influences, for example from UV radiation or other influences, after producing the joining connection.

The meltable plastics material of the melting element is preferably a thermoplastic material. The melting element may be inserted into the recess in any way desired. For example, in the simplest case the melting element may be inserted into the recess, but may also be clipped therein. Adhesive bonding of the melting element to an area of the recess is also possible.

The base material of the base element may be any desired material, but is preferably likewise a plastics material. In this case it is of particular preference if the base element and the melting element are produced in a two-component process, for example they are injection-moulded.

The composite component may be formed in the manner of a holder, in which case the base element has a fastening portion to which for example further items such as plastic clips or lines, covers and the like can be fastened. However, the composite component may also be a structural component or a covering component, in particular of a body of a motor vehicle. In this case there may be arranged in respective recesses on the base element a plurality of melting elements, which are melted at the same time or one after the other for fastening the composite component on another workpiece.

During the joining process, in which the melting element is melted, the base area of the base element may likewise be melted. However, it is preferred if the joining process is designed in such a way that the base area of the base element is not melted, or is melted only little, during the joining process, so that it essentially lies against the workpiece area. In the case of this concept, it is also possible that the plastics of the base element on the one hand and of a workpiece on the other hand have different lattice structures, such as for example POM and PE. A welding of these materials to one another is in any case only possible under certain conditions. However, as further described below, such a connection can take place within the scope of the present invention by the melting element being designed in a particular manner.

It is of particular preference in the case of the first aspect of the composite component according to the invention if the volume of the melting element and the volume of the recess are essentially equal.

This is preferably achieved by the melting element being connected to a base of the recess, but a gap being present between a circumferential area of the melting element and a circumferential area of the recess. This involves the melting element protruding with respect to the base area in the non-melted state. When the melting element is melted, it fills the circumferential gap and recedes in the axial direction, so that in the melted state it can completely fill the recess. As this happens, the base area of the base element may for example come into contact with a workpiece area (with or without melting of the base area). Even when the base area only comes into contact with the workpiece area, further protection from environmental influences can be achieved, for example also in an environment in which fluids could wash out the joining zone.

The base area may also serve as a stop and/or, in the case of relatively large components, even out unevennesses.

An escape of melted material of the melting element can be prevented almost completely. As a result, a uniform strength of the joining connection is obtained. If appropriate, an uneven escape of molten material can also be avoided, so that notch effects are reduced or avoided.

According to a further preferred embodiment, the recess of the base element is circular or annular, the melting element likewise being circular or annular.

The circular or annular form is in this case coaxial to a joining axis, along which the melting element protrudes axially with respect to the base area in the non-melted state.

In the case of a circular melting element, an annular gap that fills during the melting of the melting element may be formed between an outer circumference of the melting element and an inner circumference of a circular recess. In the case of an annular melting element, such a gap may be provided around its inner circumference and/or around its outer circumference.

According to a further preferred embodiment of the composite component according to the first aspect of the invention, the meltable plastics material of the melting element has an inductively heatable material component.

This may be for example a metal component, for example in the form of a perforated plate or a wound arrangement of a material component strand.

However, as further described below, it is of particular preference if the inductively heatable material component is formed by metal fibres that are mixed with the plastics material of the melting element.

According to a further preferred embodiment, which in combination with the preamble of claim 1 represents a composite component according to a second aspect of the invention, the base material comprises a POM material, the meltable plastics material being a combined material which comprises a POM material, an inductively heatable material component and a further plastics material that is not POM material.

The POM material of the base material is advantageous in particular with regard to various properties such as strength, hardness and stiffness in a wide temperature range. Therefore, such a base material is suitable in particular whenever the composite component is formed as a support component, which is used for example for clipping on items that are to be fastened. An example of an application is the fastening of parking sensors on a plastic bumper or the like.

The measure that the melting element comprises both a POM material and a non-POM material makes it possible to use the melting element for joining such a composite component even to such workpieces that are not produced from POM.

This is relevant because POM has a significantly different lattice structure than many other engineering plastics such as are used in the body making of motor vehicles. Therefore, POM materials can generally only be welded to one another, but not to thermoplastics of a different type.

Designing the melting element as a three-component combined material comprising POM, an inductively heatable material component and a further plastics material (which is preferably adapted to the material of the workpiece) consequently allows composite components with a base element of POM also to be welded to other thermoplastics.

The two types of plastic of the melting element can be coupled or anchored to one another by way of the inductively heatable material component. This applies in particular whenever the inductively heatable material component is formed by metal fibres.

In the case of this aspect of the invention, the melting element may be injection-moulded onto the base element.

It goes without saying that the invention according to the second aspect can be realized in the same way if the base material is not a POM material, while the material of the workpiece is a POM material.

The different plastics materials of the melting element may be contained in the melting element in the same proportions or in different proportions. The plastics materials may be homogeneously mixed in the melting element, bonded together by way of the inductively heatable material component. It may also be preferred if the melting element is formed in such a way that one plastics material, for example POM, is predominantly formed in the region of one joining area, whereas the other plastics material is predominantly formed in the region of an axially opposite joining area.

According to a further preferred embodiment that can be applied to both aspects of a composite component according to the invention and in conjunction with the preamble of claim 1 represents an independent invention (third aspect), the base element has an opening, which opens out into the recess, so that the melting element can be observed via the opening during the joining process.

The opening in this case opens out into the recess preferably in a region that is facing away from the base area of the base element. It is possible that the opening comprises a radial opening through a flange portion of the base element.

However, it is of particular preference if the opening is aligned parallel to the recess, therefore extends in the axial direction. In this case, the opening may be aligned concentrically in relation to the melting element or eccentrically in relation thereto.

An observation of the melting element during the joining process may be performed for example by way of a contactless thermometer such as a pyrometer, in the case of which a surface temperature of the melting element is sensed by means of an infrared sensor.

Such a design makes it possible to control the joining process in dependence on the observation of the melting element, in particular in dependence on the sensed temperature of the melting element.

Altogether, the above object is also achieved by a joining connection with a composite component of the aforementioned type and with a workpiece, the workpiece comprising a plastics material, which may be a POM material but is preferably a non-POM material, such as for example a PE material, a PP material, a PC material, a PA material, a PA/PC-ABS material, an ABS material, a sandwich material such as a PA material on TPE and the like, at least in the region of the workpiece area.

The above object is also achieved by a melting element that can be used in particular for a composite component of the aforementioned type, to be precise in the form of a flat, preferably circular or annular, plastic element that comprises a thermoplastic material interspersed with metal fibres and has a first joining area for joining onto a first component and a second joining area for thermoplastically joining onto a second component.

The plastic element may be separately produced as such. In particular, it may be created directly in an injection-moulding machine, the metal fibres being mixed with granules or pellets of plastic.

Processing is also possible in a two-component process.

The melting element may be produced in large numbers in the manner of a "joining pellet", and subsequently fixed according to requirements to different components, for example attached to composite components of the type described above (first and/or second and/or third aspect). The attachment to such a component may take place by way of the first joining area. The connection to this component may take place by inserting, adhesively bonding in, clipping in or the like, or by moulding onto this component.

The melting element can consequently be used for various types of composite components or other components, and can consequently be produced in large numbers, so that it can be provided at low cost.

In the case of the melting element, the proportion of metal fibres in the melting element is preferably 5% by weight to 40% by weight, in particular 10% by weight to 30% by weight. Furthermore, the length of the metal fibres may lie in a range from 0.05 mm to 2 mm, in particular in a range from 0.1 mm to 1 mm, and preferably in a range from 0.15 mm to 0.75 mm.

The fibre thickness may be less than the length of the metal fibres. In particular, the thickness of the metal fibres may preferably be less than half the length of the metal fibres, in particular less than a quarter of the length of the metal fibres, preferably less than a tenth of the length of the metal fibres, and particularly preferably less than a twentieth of the length of the metal fibres.

According to a further preferred embodiment, the metal fibres are produced from a corrosion-resistant, inductively heatable metal, such as for example a high-grade steel. The high-grade steel may for example be of the type 1.4113.

This measure allows the prevention of corrosion of the metal fibres, which could adversely affect the joining zone, in particular in an environment with aggressive fluids (for example a motor vehicle tank or bumper region or the like).

It goes without saying that, along with a thermoplastic material inter-spersed with metal fibres, the melting element may also comprise a second plastic, so that the melting element preferably comprises a first plastics material and a second plastics material. The first plastics material may for example be a POM material, and the second plastics material may for example be a non-POM material.

The above object is also achieved by a method for producing a thermoplastic joining connection by using a composite component of the type described above and/or a melting element of the type described above, the thermoplastic joining connection being formed by using an electromagnetic induction energy source.

The energy provided by the induction energy source can pass through a workpiece (in particular of plastic), so that the energy source may be arranged on another axial side than the side on which the joining connection is to be carried out. Conversely, however, the energy source may also be arranged on the same side. The method is suitable both in the case of one-sided accessibility and in the case of two-sided accessibility of the joining zone.

The induction energy source is preferably operated at high frequencies in the range of 100 to 2000 kHz. It has been found that, at frequencies of this order of magnitude, the aforementioned metal fibres can be heated particularly well and quickly, so that rapid melting of the melting element is made possible.

In the case of the method according to the invention, it is of advantage if a melting temperature of melted material, in particular of melted material of the melting element, is sensed during the production of the joining connection and the duration and/or the level of the energy supply is adapted by means of the induction energy source in dependence on the melting temperature.

This allows a high degree of reliability of the process to be achieved, since the joining connection can be produced by feed-back controlling the induction energy source.

The sensing of the melting temperature preferably takes place via an opening in a base element of a composite component.

The melting temperature is preferably determined by way of an IR temperature measurement, for example by means of a pyrometer.

Further parameters of the control may be the wall thickness of the workpiece onto which a composite component is to be joined, the type of material of the workpiece, the geometry of the workpiece and the required joining parameters. Further parameters may also be the type of surfaces and the required pulling-off or shearing forces.

In the case of two-sided accessibility and inductive heating by way of the side of the workpiece that is facing away from the joining zone, the wall thickness of the workpiece is preferably less than 10 mm, in particular less than 7 mm, and preferably less than or equal to 5 mm.

The invention achieves in at least some of its aspects an outstanding combination of criteria, which may comprise the range of application, the accessibility (one-sided/two-sided), the pressure that can be exerted on the component, the process time, the holding capability, the freedom of design, the use of additional materials, the escape of melt, the joining quality, the joining system costs and/or the joining process costs.

It goes without saying that the aforementioned features and the features still to be explained below can be used not only in the respectively specified combination, but also in other combinations or on their own without departing from the scope of the present invention.

Exemplary embodiments of the invention are represented in the drawing and are explained in more detail in the description that follows. In the drawing:
- Figure 1: shows a schematic longitudinal sectional view through a joining arrangement before its production;
- Figure 2: shows the joining arrangement of Figure 1 after its production;
- Figure 3: shows a schematic longitudinal sectional view through an embodiment of a composite component according to the invention;
- Figure 4: shows a longitudinal sectional view through a further embodiment of a composite component according to the invention;
- Figure 5: shows a schematic longitudinal sectional view through a further embodiment of a composite component according to the invention;
- Figure 6: shows a joining arrangement that is produced by means of the joining composite component of Figure 5;
- Figure 7: shows a schematic longitudinal sectional view through a further embodiment of a composite component according to the invention;
- Figure 8: shows a longitudinal sectional view through a further embodiment of a composite component according to the invention;
- Figure 9: shows a schematic representation of material combinations in the case of joining connections of the type according to the invention; and
- Figure 10: shows a schematic representation of a joining arrangement for producing a joining connection of the type according to the invention.

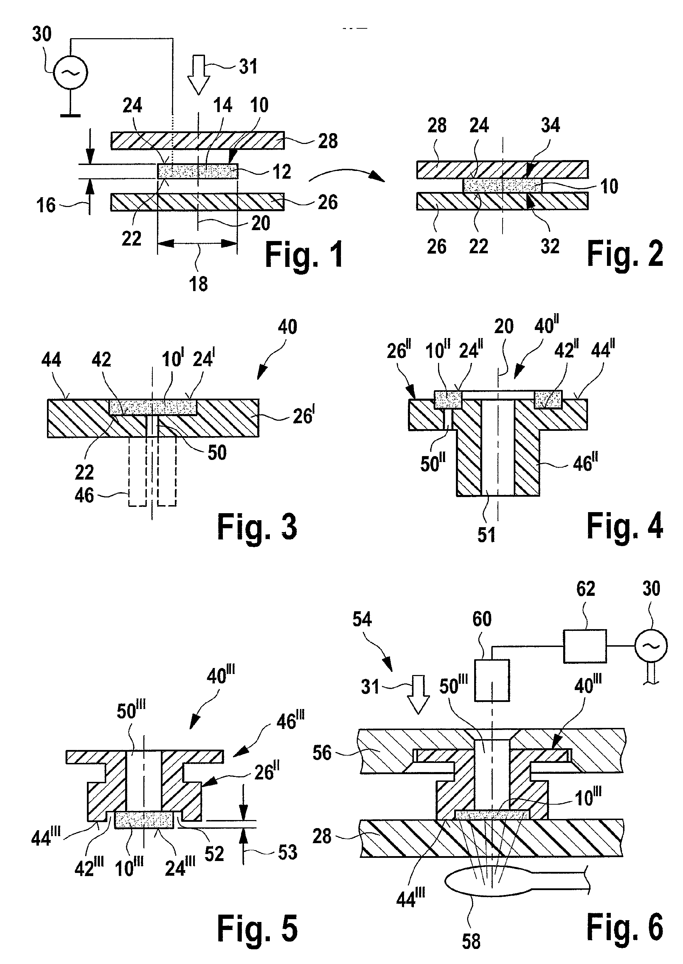

In Figure 1, a melting element 10 for producing a thermoplastic joining connection is schematically represented and is designated generally by 10. The melting element 10 comprises at least one plastics material 12 (a POM material or a non-POM material), which is interspersed with inductively heatable fibres, in particular metal fibres 14. The metal fibres are in particular high-grade steel fibres of the material 1.4113, preferably have a length in the range from 0.05 mm to 2 mm and have a much smaller fibre thickness. The proportion of metal fibres in the overall volume of the melting element 10 lies in the range from 5% by weight to 40% by weight.

The melting element 10 is formed as a pellet-like flat plastic element, which has an axial height 16 and a diameter 18. The diameter 18 is preferably at least twice as great as the height 16. The melting element 10 is preferably formed rotationally symmetrically with respect to a longitudinal axis 20, therefore has in plan view the form of a circle. As an alternative to this, the melting element 10 may also have in plan view a polygonal, elliptical or other form that is adapted to the respective intended use.

The melting element 10 has on a first axial side a first joining area 22 and on an opposite axial side a second joining area 24.

The first joining area 22 is formed for the purpose of joining the melting element 10 to a workpiece area (not designated any more specifically) of a first workpiece or first component 26. The opposite, second joining area 24 is formed for the purpose of joining the melting element 10 thermoplastically to a second workpiece or a second component 28.

The connection between the melting element 10 and the first component 26 may be a mechanical connection, but may also be an adhesive connection or else a thermoplastic welded connection. Provided for producing the thermoplastic joining connection between the melting element 10 and the second component 28 is an induction energy source 30, by means of which an electromagnetic field that is preferably operated in a frequency range from 100 kHz to 2000 kHz can be generated.

The induction energy source 30 may be connected to an induction probe in the form of an induction loop or the like, by means of which the electromagnetic field is built up in the region of the second joining area 24. Such a probe may be arranged on the axial side of the second component 28 that is opposite from the melting element 10 (in the case of two-sided accessibility), or may be arranged on the same axial side of the second component 28 as the melting element 10 (in the case of one-sided accessibility of the second component 28).

Starting from a state in which the melting element 10 is connected to the first component 26 by way of the first joining area 22, the composite component thereby formed is then connected thermoplastically to the second component 28 by way of the melting element 10 and the second joining area 24 thereof, by exerting a certain axial force, which may however be relatively small, and by the metal fibres 14 in the melting element 10 being heated by way of the induction energy source 30, whereby the plastic 12 of the melting element 10 is melted and can enter into a thermoplastic welded connection with the second component 28. It goes without saying here that the joining connection thereby formed between the melting element 10 and the second component 28 may be such that essentially only the material of the melting element 10 is melted. In practice, however, on account of the contact and the force 31, part of the second component 28 is also at least superficially melted if it is produced from plastic. For this case, the plastics of the melting element 10 and of the second component 28 respectively have such lattice structures that a thermoplastic welding process is possible. In an ideal case, the molten materials of the melting element 10 and of the second component 28 are thereby bonded together, at least superficially, so that a material-bonded connection is set up.

Figure 2 shows on the one hand a first joining connection 32 between the melting element 10 and the first component 26. On the other hand, the thermoplastic second joining connection 34 between the melting element 10 and the second component 28 is shown. Altogether, the effect is achieved that the first component 26 and the second component 28 can be connected to one another by way of the melting element 10.

The melting element 10 can be melted completely during the joining process, so that its axial height 36 is reduced and its diameter 18 is increased, which however is not shown in detail in Figure 2.

As explained, the melting element 10 may comprise a plastic 12 and metal fibres 14. The melting element 10 may however also comprise a first plastic, such as for example a POM material, metal fibres 14 and a further plastic, for example a non-POM material. In the case of such a three-component combination material for the melting element 10, it is also possible to connect to one another components 26, 28 of which one may be a POM material and the other may be a non-POM material. The choice of POM material and non-POM material should be understood as merely given by way of example. This principle can be applied generally to any type of combinations of plastics that generally cannot be directly welded to one another thermoplastically, for example on account of their lattice structure.

Figure 3 shows an axial schematic sectional view through a composite component 40, which has a melting element 10' and a base element 26', where the base element 26' may correspond to the first component 26 of Figures 1 and 2. In the case of this embodiment, as also in the case of the embodiments that follow, the melting elements 10' etc. may correspond with regard to structure to that of Figures 1/2.

In the case of this embodiment, the base element 26' has an axial recess 42, in which the melting element 10' is inserted. The melting element 10' may in this case protrude with respect to a base area 44 of the base element 26' or be inlaid flush in the recess 42.

If the melting element 10 is accommodated in such a recess 42, a thermoplastic welded connection to a second component 28 can be produced, it being possible for a radial escape of melt of the melting element 10' to be largely prevented, whereby the joining connection produced is largely protected from environmental influences and the like.

Figure 3 also shows that the base element 26' may have a fastening portion 46. In the case of this variant, the composite component 40 may for example be fixed in the manner of an anchor on plastic supports by thermoplastic welding, the composite component 14 then serving for example as an anchor for further items to be fastened, for example for plastic clips or directly for lines, carpets, coverings, etc.

The base element 26' may also have an axial opening 50, by way of which the melting element 10' can be observed during a joining process, in particular with regard to the melting temperature. As shown, the opening 50 may be formed concentrically in relation to the melting element 10', but may also be arranged eccentrically. Instead of an axial opening 50, a radial opening may also be formed in the base element 26'.

Figure 4 shows a further embodiment of a composite component 40", which corresponds generally with regard to its structure and the way in which it functions to the composite component 40 of Figure 3. The same elements are therefore identified by the same reference numerals.

In the case of the composite component 40" of Figure 4, an annular recess 42" , in which an annular melting element 10" is inserted, is formed in the base area 44" of the base element 26".

Figure 4 also shows an eccentrically arranged opening 50" for observing the melting element 10" during a joining process. The base element 26" of Figure 4 also has a central receptacle 51, which may be, but does not have to be, formed as a receptacle that passes axially through. The receptacle 51 may for example serve for receiving sensors or the like, such as can be used for example for parking distance determination. The receptacle 51 is consequently formed in a fastening portion 46" of the base element 26". It goes without saying for this case that for example the second component 28 may also have a through-opening, so that a sensor mounted in the receptacle 51 can also "see" through the second component 58 if the composite component 40" is welded onto such a second component 28 (such as for example a bumper).

In Figure 4 it can also be seen that the melting element 10" protrudes in the axial direction with respect to the base area 44" in the non-melted state.

Figure 5 shows a further embodiment of a composite component 40"'. This is basically constructed in a way similar to the composite component 40 of Figure 3. The same elements are therefore identified by the same reference numerals. In the text that follows, essentially the differences are explained.

In the case of the composite component 40'" of Figure 5, the recess 42'" is formed in such a way that its volume (measured from the base area 44"') is essentially equal to the volume of a melting element 24'" inserted therein. The melting element 24"' protrudes in the axial direction with respect to the base area 44"', as is represented at 53 in Figure 5. The approximately equal volumes have the effect that an annular gap 52 is thereby formed between the melting element 10'" and an inner circumferential periphery of the recess 42"'.

In the case of the embodiment of Figure 5, the opening 50'" is in turn an axial central opening, and the fastening portion 46'" has in the case of this embodiment a circumferential groove, which may for example serve for fixing further items.

In Figure 6 it is shown how the composite component 40'" is joined onto a second component 28. This involves using a joining arrangement 54. The joining arrangement 54 comprises a holder 56, on which the composite component 40'" is held. The joining arrangement 54 is also formed for exerting an axial force 31 on the holder 56, and consequently on the composite component 40"'.

The joining arrangement 54 also comprises an induction loop 58, which is coupled to an induction energy source 30. By way of the induction loop 58, which in the case of the embodiment of Figure 6 is arranged on the side of the second component 28 that is axially opposite from the composite component 40'" (two-sided accessibility), the metal fibres of the melting element 10'" are inductively heated, whereby the plastic (or the plastics) of the melting element 10 melt(s). The force 31 causes the composite component 40'" to be pressed onto the second component 28 to the extent that the base area 44"' rests on the workpiece area of the second component 28. In this state, the molten material of the melting element 10'" completely fills the volume of the recess 42"', as is represented in Figure 6. The fact that the base area 44'" lies against the area of the second component 28 means that a radial escape of melted material of the melting element 10'" is prevented. The joining zone can therefore be protected from environmental influences. Flushing out of material from the joining zone can be prevented, so that the metal fibres are not exposed. Protection from UV radiation is also achieved.

In order to be able to control the joining process precisely, it is provided that the joining arrangement 54 also comprises a thermometer 60, which measures the temperature of the melting element 10"', to be precise contactlessly by way of an infrared sensor, which may for example be fitted in a pyrometer 60. The temperature determined by way of the temperature sensor (pyrometer) 60 is passed to a control device 62 of the joining arrangement 54, which activates the induction energy source 30 in dependence on the temperature of the joining zone, to be precise in order to set or feed-back control the duration and/or the level of the energy supply to the induction loop 58 in dependence on the temperature.

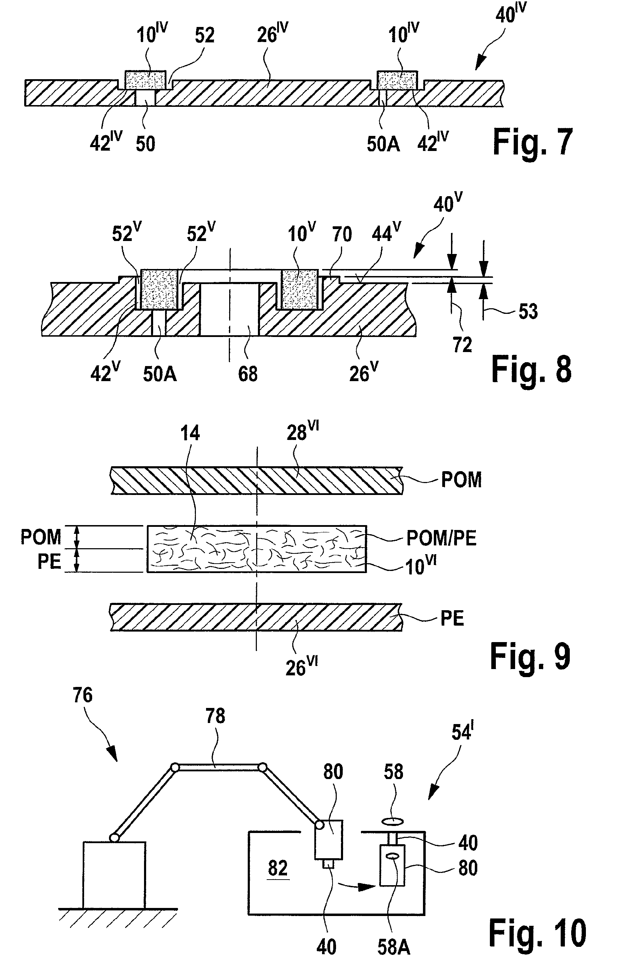

Figure 7 shows a further embodiment of a composite component 40^{IV}, which has a base element 26^{IV} on which there are formed two recesses 42^{IV} in which melting elements 10^{IV} are respectively inserted. In this way, the base element 26^{IV} can be connected to a further component by way of a plurality of contact points. Each of the joining zones is formed in this case in a way similar to in the case of the embodiment of Figure 5.

Figure 8 shows a further embodiment of a composite component 40^{V}, in which, in a way similar to in the case of the embodiment of Figure 4, an annular melting element 10^{V} is inserted in an annular recess 42^{V}, to be precise in such a way that an annular gap 52^{V} remains both at the inner circumference and the outer circumference of the melting element 10^{V}.

As in the case of the embodiment of Figure 4, provided in the base element 26^{V} is a central aperture 68, which may serve for example as a receptacle 51 for a further part. Figure 8 also shows that on the base area 44^{V} there may be provided concentrically in relation to the recess 42^{V} an annular web 70, which protrudes in the axial direction with respect to the base area 44^{V}, but protrudes by a projecting amount 72 that is less than the projection 53 by which the melting element 10^{V} protrudes with respect to the base area 44^{V}. The annular web 70 may for example serve for the early closing of the radially outer annular gap 52^{V} during a joining process, so that melted material of the melting element 10^{V} cannot pass radially to the outside. It is also conceivable that the annular web 70 is likewise melted in the course of the joining method, in order to completely seal the joining zone radially outwards.

Figure 9 shows a view comparable to Figure 1 of a melting element 10^{V}, which is to be thermoplastically connected to a first component 26^{VI} and to a second component 28^{VI}. The first component 26^{VI} consists of a plastic of a first type of material, such as for example PE. The second component 28^{VI} consists of a second type of material, for example POM. These two plastics materials have different lattice structures, so that they cannot be directly welded to one another thermoplastically, or only with difficulty.

The melting element 10^{VI} comprises a first plastics material, which may for example be identical to the plastics material of the first component 26^{VI}, at least has a similar or comparable lattice structure, so that welding to the plastics material of the first component 26^{VI} is possible. The melting element 10^{VI} also comprises a second plastics material, which has a comparable lattice structure to POM, for example POM.

The two plastics materials are connected to one another in the melting element 10^{VI} by way of the metal fibres 14 and anchor themselves in these. The melting element 10^{VI}, which is formed as a three-component combination material, allows the different components 26^{VI} and 28^{VI} to be thermoplastically welded to one another.

As represented in Figure 9, the two plastics materials of the melting element 10^{VI} may be mixed uniformly over the volume of the melting element 10^{VI}, but may also be spatially separate from one another, so that the two plastics materials of the melting element 10^{VI} are separate from one another in the axial direction or at least are present in different concentrations at the axial ends, so that the thermoplastic welding processes with the respective components 26^{VI} and 28^{VI} are simplified.

Figure 10 shows a further embodiment of a joining arrangement 54', which has a robot 76, provided on which is a handling system 78 by means of which a joining head 80 is guided. The joining head 80 may for example be introduced into a cavity 82. The joining head 80 comprises a holder (not represented) for a composite component 40 and can be positioned within the cavity 82 in such a way that the composite component 40 can be joined onto an inner wall of the vessel that forms the cavity 82, for example a plastic tank for a motor vehicle or the like.

In Figure 10 it can be seen that, in the case of two-sided accessibility, an induction loop 58 of an induction energy source 30 may be arranged outside the vessel. As an alternative to this, such an induction loop 58A may however also be arranged within the cavity 82, that is to say connected to the joining head 80. The latter variant is preferred in particular in the case of one-sided accessibility.

## Claims

1. Composite component (40) that can be joined onto an area of a workpiece (28), with a base element (26) of a base material, the base element (26) having an area (44) for joining onto the workpiece area, a recess (42) in which a melting element (10) of a meltable plastics material is arranged being formed in the base area (44),
**characterized in that**
the melting element (10) protrudes axially with respect to the base area (44) in the non-melted state, so that the composite component (40) can be placed with the melting element (10) onto the workpiece area at the beginning of the joining process, the volume of the melting element (10) and the volume of the recess (42) being adapted to one another in such a way that the base area (44) can come closer to the workpiece area during the joining process, in order to limit an escape of molten material of the melting element (10) from the recess (42).

2. Composite component according to Claim 1, **characterized in that** the volume of the melting element (10) and the volume of the recess (42) are essentially equal.

3. Composite component according to Claim 1 or 2, **characterized in that** the recess (42) is circular or annular, the melting element (10) likewise being circular or annular.

4. Composite component according to one of Claims 1 - 3, **characterized in that** the meltable plastics material of the melting element (10) has an inductively heatable material component (14).

5. Composite component according to one of Claims 1 - 4 or according to the preamble of Claim 1, **characterized in that** the base material comprises a POM material, the meltable plastics material being a combined material which comprises a POM material, an inductively heatable material component (14) and a further plastics material that is not POM material.

6. Composite component according to one of Claims 1- 5 or according to the preamble of Claim 1, **characterized in that** the base element (26) has an opening (50), which opens out into the recess (42), so that the melting element (10) can be observed via the opening (50) during the joining process.

7. Composite component according to Claim 6, **characterized in that** the opening (50) is aligned parallel to the recess (42).

8. Joining connection with a composite component (40) according to one of Claims 1 - 7 and a workpiece (28), the workpiece (28) comprising a plastics material, at least in the region of the workpiece area.

9. Melting element (10), in particular for a composite component (40) according to one of Claims 1 - 7, in the form of a flat, preferably circular or annular, plastic element that comprises a thermoplastic material interspersed with metal fibres and has a first joining area (22) for joining onto a first component (26) and a second joining area (24) for thermoplastically joining onto a second component (28).

10. Melting element according to Claim 9, **characterized in that** the proportion of metal fibres in the melting element (10) is 5% by weight to 40% by weight, in particular 10% by weight to 30% by weight, and/or **in that** the length of the metal fibres lies in the range from 0.05 mm to 2 mm, in particular in the range from 0.1 mm to 1 mm, and preferably in the range from 0.15 mm to 0.75 mm.

11. Melting element according to Claim 9 or 10, **characterized in that** the metal fibres are produced from a corrosion-resistant, inductively heatable metal.

12. Melting element according to one of Claims 9 - 11, **characterized in that** the melting element (10) comprises a first plastics material and a second plastics material.

13. Method for producing a thermoplastic joining connection by using a composite component (40) according to one of Claims 1 - 7 and/or a melting element (10) according to one of Claims 9 - 12, the thermoplastic joining connection being formed by using an electromagnetic induction energy source (30).

14. Method according to Claim 13, a melting temperature of melted material being sensed during the production of the joining connection and the duration and/or the level of the energy supply being adapted by means of the induction energy source (30) in dependence on the melting temperature.
